# EUROPÄISCHE PATENTANMELDUNG

(11) **EP 2 575 218 A2**
(43) Veröffentlichungstag der Anmeldung: **03.04.2013**
(21) Anmeldenummer: 12006978.6
(22) Anmeldetag: 09.10.2012
(51) Int. Cl.: H01S 3/11, H01S 3/081, G02B 17/00, G02B 17/02

(54) **Laseranordnung**

(30) Priorität: 28.09.2011 DE 102011114474
(71) Anmelder: Institut Franco-Allemand de Recherches de Saint-Louis, 68301 Saint-Louis Cedex (FR)
(72) Erfinder: Eichhorn, Marc D., 79736 Rickenbach (DE); Stöppler, Georg D., 79576 Weil am Rhein (DE)

(57) **Zusammenfassung**

Eine bekannte Laseranordnung (1) umfasst
● einen Resonator mit einem Strahlengang zwischen mindestens einem ersten und zweiten Resonatorspiegel (10, 20), derart, dass im Strahlengang folgende Elemente angeordnet sind:
● ein Lasermedium (30), das von einer Pumpvorrichtung pumpbar ist;
● ein polarisationsabhängiger Strahlteiler (40) zum Auskoppeln eines Arbeitslaserstrahls;
● ein elektrooptischer Modulator (50) zur Änderung der Polarisation.

Bei der neuen Laseranordnung soll die Energie des Pulses des Arbeitslaserstrahls unter gleichzeitiger Verlängerung der Dauer erhöht sein.

Hierzu ist im Strahlengang zusätzlich ein optisches Wegverlängerungssystem (60) angeordnet, das mindestens eine erste Reftektionsvorrichtung (61) und eine zweite, hierzu beabstandete Reflektionsvorrichtung (62) aufweist, derart ausgebildet, dass ein Laserstrahl mehrfach zwischen der ersten Reflektionsvorrichtung (61) und der zweiten Reflektionsvorrichtung (62) unter Erzeugung einer periodischen Mehrfachabbildung hin- und herreflektierbar ist.

## Beschreibung

Eine gattungsgemäße Laseranordnung ist aus der US 2010/0098115 A1 bekannt. Hierbei ist ein Resonator mit einem Strahlengang zwischen hochreflektierenden Resonatorspiegeln vorgesehen. Im Strahlengang ist ein Lasermedium angeordnet, das von einer Pumpvorrichtung pumpbar ist. Ferner ist im Strahlengang ein polarisationsabhängiger Strahlteiler zum Auskoppeln eines Laserstrahls angeordnet. Der ausgekoppelte Laserstrahl ist der nutzbare Arbeitslaserstrahl. Da der Laserstrahl zwischen den Resonatorspiegeln und nicht über einen der Resonatorspiegel ausgekoppelt wird, handelt es sich um eine "Cavity-Dumping-Laseranordnung". Ferner ist im Strahlengang ein elektrooptischer Modulator zur Polarisationsänderung angeordnet. Im Betrieb der Laseranordnung dient der elektrooptische Modulator (EOM) als Schalter, um über den polarisationsabhängigen Strahlteiler einen Laserstrahlpuls auszukoppeln.

Bevor der Arbeitslaserstrahl ausgekoppelt wird, werden die optischen Elemente in der Kavität durch eine hohe Laserstrahlintensität beansprucht. Die hohe resonatorinterne Intensität resultiert daher, dass die Resonatorlänge relativ kurz ist und die Pulsdauer über die fallende Flanke des Hochspannungssignals am EOM eingestellt wird, wobei die Pulsdauer immer länger als der vollständige Umlauf (round-trip) ist. Durch die Veränderung der Pulsdauer durch die Variation der fallenden Flanke bleiben die Strahlradien auf den optischen Elementen in der Kavität im Wesentlichen unverändert. Aufgrund der relativ kurzen Kavität ist zudem das Modenvolumen in der Kavität gering und die Photonendichte ist sehr hoch bei Pulsenergien von mehreren 10 mJ. Um eine Beschädigung auf den optischen Elementen in der Kavität zu verhindern, müssen die Strahlradien in einer kurzen Kavität sehr groß sein. Dieser Parameter kann nicht beliebig groß werden, da er in Zusammenhang mit der Resonatorstabilität, der Strahlqualität und der Effizienz steht. Die maximal mögliche Pulsenergie des Arbeitslaserstrahls wird durch die Belastbarkeit der optischen Elemente in der Kavität begrenzt. Geringe Pulsenergien führen bereits zu einer Zerstörung von optischen Elementen, da die resonatorinterne Strahlintensität hoch ist.

Die Parameter Pulswiederholungsfrequenz und Pulsdauer sind einstellbar. Dadurch kann man im Rahmen einer Werkstückbearbeitung unterschiedlichen Materialien genau Rechnung tragen. Um den Laserstrahlpuls variabel auf 100 ns oder mehr zu strecken, erfolgt die Ansteuerung des elektrooptischen Modulators nach einem vorgegebenen Spannungsverlauf. Hierbei wird ein Ansteuersignal mit einer langsam abfallenden Flanke verwendet. Hierzu ist jedoch eine aufwändige elektrische Schaltung erforderlich.

Die DE 10 2006 047 257 A1 zeigt ein Wegverlängerungssystem, das mindestens zwei beabstandete, leicht gekrümmte Spiegel aufweist. Ein Laserstrahl ist mehrfach zwischen den Spiegeln unter Erzeugung einer Mehrfachabbildung hin- und herreflektierbar. Der Strahl wird außerhalb eines Laserresonators in das Verzögerungsmodul eingekoppelt. Der Strahl wird zudem mittels eines Umlenkspiegels in das Verzögerungsmodul ein- und ausgekoppelt. Spätestens nach 8 Reflektionen wird ausgekoppelt. Dadurch wird die Pulsdauer des Lichtstrahls gestreckt. Bei einer Teildurchlässigkeit des Einkoppelumlenkspiegels können auch Pulsvervielfachungen erzeugt werden. Das Verzögerungsmodul besitzt in der Mitte den Fokus. Dort wird ein - und ausgekoppelt. Der eingekoppelte, kollimierte Strahl wird an der Rückseite des Umlenkspiegels mit demselben Durchmesser ausgekoppelt. Dies ist aber nur an dieser Position möglich.

Die DE 10 2006 031 183 B4 betrifft ein Lasersystem, das neben einer Laseranordnung einen optisch parametrischen Oszillator aufweist.

Der Erfindung liegt die Aufgabe zu Grunde, eine gattungsgemäße Laseranordnung so auszubilden, dass die Energie des Pulses des Arbeitslaserstrahls unter gleichzeitiger Verlängerung der Dauer erhöht ist.

Diese Aufgabe wird erfindungsgemäß durch die Merkmale des Anspruches 1 gelöst.

Die Vorteile der Erfindung resultieren daher, dass
- im Strahlengang zusätzlich ein optisches Wegverlängerungssystem angeordnet ist,
- das mindestens eine erste Reflektionsvorrichtung und eine zweite, hierzu beabstandete Reflektionsvorrichtung aufweist, derart ausgebildet,
- dass ein Laserstrahl mehrfach zwischen der ersten Reflektionsvorrichtung und der zweiten Reflektionsvorrichtung unter Erzeugung einer periodischen Mehrfachabbildung hin- und herreflektierbar ist.

Durch das optische Wegverlängerungssystem ist die optische Wegstrecke, die der resonatorinterne Laserstrahl innerhalb der Kavität zurücklegt, um ein Vielfaches verlängert. Die Pulsdauer des oszillierenden Laserstrahls innerhalb der Kavität ist bei vollständiger Auskopplung entsprechend einer 100-prozentrigen Transmission eine Funktion dieser Wegstrecke und erhöht sich mit länger werdender Wegstrecke. Da die Pulsdauer aufgrund der Wegverlängerung erhöht ist, ist auch das Modenvolumen der Kavität erhöht. Dies bedeutet, dass die Photonendichte durch die Verteilung der Photonen auf ein großes Modenvolumen reduziert ist. Dies schützt die optischen Bauteile im Resonator gegen eine Überbelastung. Andererseits kann der resonatorinterne Laserstrahl eine sehr viel höhere Pulsenergie aufweisen, bis die Zerstörschwelle der internen, optischen Komponenten erreicht ist. Mit der sehr einfach ausgebildeten Laseranordnung können Pulsenergien von weit über 100 mJ erzeugt werden.

Das Wegverlängerungssystem stellt eine passive optische Einrichtung dar. Die erste und zweite Reflektionsvorrichtung können einen Abstand von 1 m aufweisen. Dieser Abstand ist justageunempfindlich. Wird der Laserstrahl 10-mal hin- und herreflektiert, ergibt sich eine einfache optische Weglänge von 20 m. Die optische Weglänge steigt folglich zum einen mit der Anzahl der Hin- und Herreflexionen und zum anderen durch eine Erhöhung des Abstandes zwischen reflektierenden Spiegelflächen der ersten und zweiten Reflexionsvorrichtung.

Das Hin- und Herreflektieren erfolgt unter Erzeugung einer periodischen Mehrfachabbildung. Eine periodische Mehrfachabbildung bedeutet, dass innerhalb des Strahlenganges des Wegverlängerungssystems das Strahlparameterprodukt gleich bleibt. Dadurch ist es möglich, dass der Ausgangsstrahl des Wegverlängerungssystems nahezu unverändert zum Eingangsstahl des Wegverlängerungssystems ist. Durch die periodische Mehrfachabbildung wird eine Aufweitung des Resonatormodes bei gleicher Propagationslänge ohne abbildende Elemente verhindert.

Die Durchmesser des Systems bleiben erhalten, Wird das Wegverlängerungssystem in einen bestehenden Resonator eingebaut, bleiben seine Stabilität und seine Eigenschaften so gut wie unverändert, selbst wenn der Resonator zuvor hinsichtlich thermischer Linsen korrigiert wurde.

Weil die Pulsdauer des oszillierenden Laserstrahls im Resonator höher ist, ist gleichzeitig in gewünschter Weise auch die Pulsdauer des anschließend ausgekoppelten Arbeitslaserstrahls erhöht. Weil die Pulsdauer erhöht ist, können die bisherigen, aufwändigen elektronischen Maßnahmen zur Pulsdauerverlängerung entfallen. Mit der einfach ausgebildeten Laseranordnung mit einem Wegverlängerungssystem kann eine Pulsdauer zwischen 80 ns und 150 ns erreicht werden.

Gemäß einer Ausgestaltung der Erfindung ist das Wegverlängerungssystem so ausgebildet, dass sein Ausgangsstahl eine 1 zu 1-Abbildung seines Eingangsstrahles ist. Eine 1 zu 1-Abbildung bedeutet, dass die Strahlparameter, wie Strahldurchmesser und Divergenz, erhalten bleiben. Die 1 zu 1-Abbildung vereinfacht die Auslegung der Laseranordnung dadurch, dass die Position des Wegverlängerungssystems in der Kavität keine Rolle spielt.

Gemäß einer weiteren Ausgestaltung der Erfindung weist eine der Reflektionsvorrichtungen des Wegverlängerungssystems prismatische bzw. gewinkelte Spiegelflächen auf. Diese Spiegelflächen korrespondieren mit einem Mittel mit Fokussiereigenschaften. Dies stellt eine erste Variante einer Reflektionsvorrichtung dar. Die prismatischen Spiegelflächen dienen auch der Umlenkung. Die Mittel mit Fokussiereigenschaften dienen der Erzeugung einer periodischen Mehrfachabbildung. Die Mittel mit Fokussiereigenschaften können ein eigenständiges Linsenbauteil oder eine angeformte, gekrümmte Oberfläche sein.

Gemäß einer weiteren Ausgestaltung der Erfindung weist eine der Reflektionsvorrichtungen des Wegverlängerungssystems eine gekrümmte Spiegelfläche auf. Dies stellt eine zweite Variante einer Reflektionsvorrichtung dar. Gemäß einer ersten Untervariante kann die Reflektionsvorrichtung ein Hohlspiegel geringen Krümmungsradius oder gemäß einer zweiten Untervariante ein Rotationsparaboloid-Hohlspiegel mit Umlenkung sein.

Gemäß einer weiteren Ausgestaltung der Erfindung ist das Wegverlängerungssystem so ausgebildet, dass über ein gemeinsames Fenster sowohl eingekoppelt als auch ausgekoppelt wird. Mit dieser Maßnahme erübrigt sich ein separates, kostenaufwändiges Auskoppelfenster. Ferner erhält man eine zusätzliche Reflexion und damit eine längere optische Wegstrecke.

Gemäß einer weiteren Ausgestaltung der Erfindung ist der elektrooptische Modulator lediglich an eine einfache Steuereinrichtung angeschlossen. Da das Wegverlängerungssystem gleichzeitig die Pulsdauer des Arbeitslaserstrahls erhöht, erübrigt sich eine aufwändige Steuereinrichtung zur Pulsdauerverlängerung des Arbeitslaserstrahls.

Gemäß einer weiteren Ausgestaltung der Erfindung gibt die Steuereinrichtung lediglich ein einfaches Rechteck-Pulssignal ab. Ein Rechteck-Pulssignal ist einfach zu erzeugen. Ferner reicht ein Rechteck-Pulssignal aus, da ein Pulssignal mit einer langsam abfallenden Flanke zur Pulsdauereinstellung nicht benötigt wird.

Gemäß einer weiteren Ausgestaltung der Erfindung weist ein Resonatorspiegel eine Reflektivität zwischen 80 und 99 % auf. Hierdurch wird die resonatorinterne Laserintensität zum Schutz der optischen Komponenten limitiert.

Gemäß einer weiteren Ausgestaltung der Erfindung ist die Laseranordnung Teil eines Lasersystems mit einem optisch parametrischen Oszillator (OPO). Mit der Laseranordnung ist der optische parametrische Oszillator pumpbar. Dies stellt ein sehr vorteilhaftes Konzept insbesondere dann dar, wenn das Lasermedium ein Festkörperlasermedium ist, mit dem ein Laserstrahl der Wellenlänge von 1 bis 3 µm erzeugbar ist. Ein derartiges Lasermedium eignet sich gut für militärische und medizinische Anwendungen, um in Verbindung mit dem nachgeschalteten, optisch parametrischen Oszillator sehr energiereiche Laserpulse im mittleren Infrarotbereich zu erzeugen. Für hohe OPO-Pulsenergien werden aufgrund von Konversionsverlusten und Absorptionen im nichtlinearen Kristall wesentlich höhere Pumpenergien benötigt. Mit steigender Pulsenergie wird die Erzeugung einer beugungsbegrenzten Strahlqualität immer schwieriger, da die thermische Belastung auf das Lasermedium thermische Effekte erzeugt, die sich auf die Resonatorauslegung auswirken.

Gemäß einer weiteren Ausgestaltung der Erfindung weist das Lasersystem zusätzlich einen optisch parametrischen Verstärker auf, der vom optisch parametrischen Oszillator pumpbar ist.

Ausführungsbeispiele der Erfindung werden nachfolgend an Hand der Zeichnungen näher erläutert. Dabei zeigen jeweils als vereinfachte Prinzipdarstellungen:
Fig. 1 eine Laseranordnung mit einem ersten und zweiten hochreflektierenden Resonatorspiegel,
Fig. 1a bis 1d jeweils ein Diagramm, um die Funktionsweise einer Laseranordnung nach Fig. 1 zu illustrieren, wobei in jedem Diagramm ein Laserparameter über die Zeit dargestellt ist,
Fig. 2 eine Laseranordnung, bei der ein erster Resonatorspiegel nicht hoch reflektierend ist und ein zweiter Resonatorspiegel hoch reflektierend ist,
Fig. 2a bis 2d jeweils ein Diagramm, um die Funktionsweise einer Laseranordnung nach Fig. 2 zu illustrieren, wobei in jedem Diagramm ein Laserparameter über die Zeit dargestellt ist,
Fig. 3, 3a, 3b, 3c eine erste Ausführung eines Wegverlängerungssystems in perspektivischer Darstellung, Vorderansicht, Seitenansicht der ersten Reflektionsvorrichtung und Seitenansicht der zweiten Reflektionsvorrichtung,
Fig. 4, 4a, 4b, 4c eine zweite Ausführung eines Wegverlängerungssystems in perspektivischer Darstellung, Vorderansicht, Seitenansicht der ersten Reflektionsvorrichtung und Seitenansicht der zweiten Reflektionsvorrichtung,
Fig. 5, 5a, 5b, 5c eine dritte Ausführung eines Wegverlängerungssystems in perspektivischer Darstellung, Vorderansicht, Seitenansicht der ersten Reflektionsvorrichtung und Seitenansicht der zweiten Reflektionsvorrichtung,
Fig. 6, 6a, 6b, 6c eine vierte Ausführung eines Wegverlängerungssystems in perspektivischer Darstellung, Vorderansicht, Seitenansicht der ersten Reflektionsvorrichtung und Seitenansicht der zweiten Reflektionsvorrichtung,
Fig. 7, 7a, 7b, 7c eine fünfte Ausführung eines Wegverlängerungssystems in perspektivischer Darstellung, Vorderansicht, Seitenansicht der ersten Reflektionsvorrichtung und Seitenansicht der zweiten Reflektionsvorrichtung,
Fig. 8 die Laseranordnung nach Fig. 1, die Teil eines Lasersystems mit einem optisch parametrischen Oszillator ist.

### Erste Laseranordnung mit hochreflektierenden Spiegeln

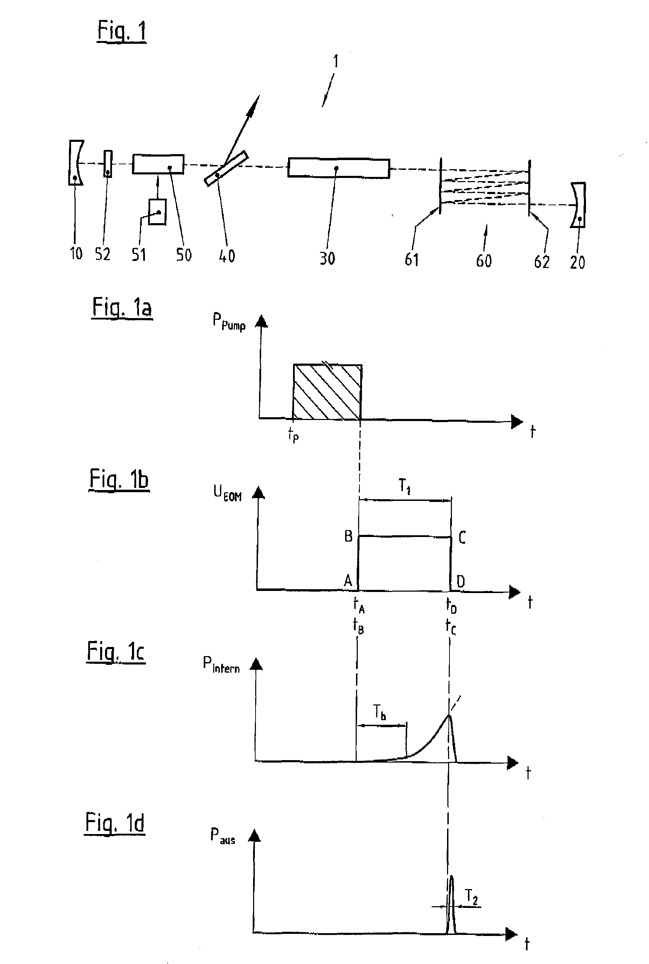

Die Fig. 1 betrifft eine erste Laseranordnung. Bei diesem Ausführungsbeispiel sind die Resonatorspiegel hochreflektierend.

Dargestellt ist eine Laseranordnung 1 mit einem Resonator mit einem Strahlengang zwischen einem ersten Resonatorspiegel 10 und einem zweiten Resonatorspiegel 20. Beide Resonatorspiegel sind hochreflektierend. Im Strahlengang sind ein Lasermedium 30, ein polarisationsabhängiger Strahlteiler 40, ein elektrooptischen Modulator (EOM) 50 und ein optisches Wegverlängerungssystem 60 angeordnet. Es handelt sich um eine sogenannte Cavity-Dumping-Laseranordnung Das Lasermedium 30 ist von einer Pumpvorrichtung pumpbar, die nicht mit dargestellt ist. Der polarisationsabhängige Strahlteiler 40 dient zum Auskoppeln eines Arbeitslaserstrahls.

In Abweichung zum dargestellten Ausführungsbeispiel können auch mehr als zwei Resonatorspiegel eingesetzt werden. Dies wäre bei einem Ringresonator der Fall.

Der elektrooptische Modulator 50 dient der Änderung der Polarisation und bildet einen Schalter für den polarisationsabhängigen Strahlteiler 40, über den der Arbeitslaserstrahl ausgekoppelt wird. Der elektrooptische Modulator 50 ist an eine Steuereinrichtung 51 angeschlossen und wird von dieser geschaltet. Die Steuereinrichtung 51 umfasst einen Pulsgenerator und eine vom Pulsgenerator ansteuerbare Hochspannungsquelle. Der elektrooptische Modulator 50 ist eine Pockelszelle. Nicht bei allen Pockelszellenmaterialien, wie zum Beispiel RTP (Rubidium Titanyl Phosphat), darf dauerhaft aufgrund von Materialverunreinigungen eine Hochspannung zur Erzeugung eines elektrischen Feldes angelegt werden. Daher ist im Strahlengang des Resonators zusätzlich eine λ/4-Platte 52 eingefügt, damit der Resonator, wenn keine Spannung am EOM anliegt, geschlossen ist.

Das Wegverlängerungssystem 60 weist eine erste Reflektionsvorrichtung 61 und eine zweite, hierzu beabstandete Reflektionsvorrichtung 62 auf. Ein Laserstrahl ist mehrfach zwischen der ersten Reflektionsvorrichtung 61 und der zweiten Reflektionsvorrichtung 62 unter Erzeugung einer periodischen Mehrfachabbildung hin- und herreflektierbar.

Das Wegverlängerungssystem 60 ist so ausgebildet, dass sein Ausgangsstahl eine 1 zu 1-Abbildung seines Eingangsstrahles ist.

### Funktionsweise der ersten Laseranordnung

Die Funktionsweise der in Fig. 1 gezeigten Laseranordnung wird an Hand der Fig. 1a bis 1d erläutert:
- In Fig. 1a ist der Parameter der Pumpleistung P_{Pump} über die Zeit aufgetragen.
- In Fig. 1b ist der Parameter der Spannung U_{EOM} über die Zeit aufgetragen. Die Spannung U_{EOM} ist die Spannung, die von der Steuereinrichtung 51 an den elektrooptischen Modulator (EOM) angelegt wird.
- In Fig. 1c ist der Parameter der resonatorinternen Laserleistung P_{Intern} über die Zeit aufgetragen.
- In Fig. 1d ist der Parameter der ausgekoppelten Arbeitslaserleistung Pₐᵤₛ über die Zeit aufgetragen.

Wie in Fig. 1b dargestellt, ist mit der Steuereinrichtung 51 (Fig. 1) ein Rechteck-Pulssignal für den elektrooptischen Modulator 50 (Fig. 1) erzeugbar. In Fig. 1b weist das Rechteck die Eckpunkte A, B, C und D auf. Der Zeitpunkt t_{A} fällt vereinfacht mit dem Zeitpunkt t_{B} zusammen, wogegen der Zeitpunkt t_{C} vereinfacht mit dem Zeitpunkt t_{D} zusammenfällt. Durch den Spannungsanstieg am EOM von A nach B wird der Resonator geschlossen. Zwischen B und C liegt eine Zeitspanne T₁ vor, in der die Resonatorkavität geschlossen ist. Durch den auf den elektrooptischen Modulator wirkenden Spannungsabfall von C nach D wird der Resonator geöffnet.

Fig. 1a zeigt, dass zum Zeitpunkt t_{A} des Öffnens des Resonators der Pumpbetrieb eingestellt wird. Fig. 1c illustriert, dass während der in Fig. 1b eingezeichneten Zeitdauer T₁ die resonatorinterne Laserleistung exponentiell bis zu einem Grenzwert ansteigt. Der Grenzwert richtete sich nach der Zerstörschwelle für die optischen Komponenten. Um eine Zerstörung von optischen Komponenten zu vermeiden, darf T₁ eine vorgegebene Zeitdauer nicht überschreiten. In Fig. 1d ist die Pulsdauer T₂ des ausgekoppelten Arbeitslaserstrahls dargestellt.

Ebenso ist die Pulsdauer T₂ des ausgekoppelten Arbeitslaserstrahls erhöht, wegen des exponentiellen Anstiegs, wie Fig. 1c zeigt. Die Kavitätsaufbauzeit T_{b} richtet sich nach der beaufschlagten Pumpleistung und kann allgemein zu T_{b} ≈ (22.5 ± 5)*τ_{c}/(r -1) bestimmt werden. Hierbei stellt τ_{c} die Kavitätslebensdauer der Photonen dar. Ferner steht r dafür, wievielmal das System über dem Laser-Schwellenwert betrieben wird. Die ausgekoppelte Arbeitslaserleistung Pₐᵤₛ bezogen auf den Zeitraum T₂ wird sich erst wesentlich verändern, wenn T₁ größer als T_{b} ist.

### Zweite Laseranordnung

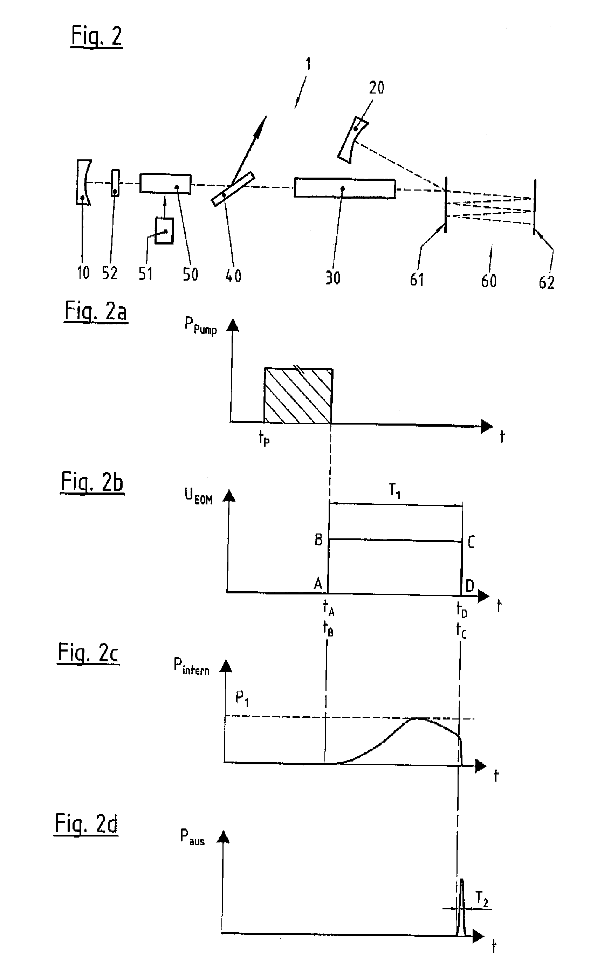

Die in Fig. 2 gezeigte Laseranordnung unterscheidet sich von der in Fig. 1 dargestellten Laseranordnung zunächst dadurch, dass der erste Resonatorspiegel 10 eine Reflektivität von 90 % aufweist. Der Reflektionsgrad kann zwischen 80 und 99 % liegen, um einen Effekt einer Begrenzung der resonatorinternen Laserleistung zu erzielen. Das Wegverlängerungssystem 60 ist so ausgebildet, dass über ein gemeinsames Fenster sowohl eingekoppelt als auch ausgekoppelt wird. Im dargestellten Fall ist das gemeinsame Fenster in der ersten Reflektionsvorrichtung 61 angeordnet. Im Gegensatz zur in Fig. 1 gezeigten Ausführung entfällt ein Auskoppelfenster in der zweiten Reflexionsvorrichtung 62. Ebenso erhält man aufgrund des gemeinsamen Fensters eine zusätzliche Reflexion und damit eine längere optische Wegstrecke.

Ansonsten stimmt die in Fig. 2 gezeigte Laseranordnung mit der in Fig. 1 gezeigten Laseranordnung überein, wobei gleiche Bauteile mit gleichen Bezugszeichen versehen sind.

In den Diagrammen der Fig. 2a bis 2b sind entsprechend den zuvor diskutierten Diagrammen Fig. 1a bis 1d die gleichen Parameter jeweils über die Zeit aufgetragen:
- Die Pumpleistung P_{Pump},
- die am elektrooptischen Modulator angelegte Spannung U_{EOM},
- die resonatorinterne Laserleistung Pᵢₙₜₑᵣₙ,
- die ausgekoppelte Arbeitslaserleistung Pₐᵤₛ.

In Fig. 2c ist illustriert, dass aufgrund eines Resonatorspiegels niedriger Reflektivität die resonatorinterne Laserleistung langsamer ansteigt und begrenzt wird. Damit erreicht man, dass die in Fig. 2b eingezeichnete Zeitdauer T₁, in der der Resonator geschlossen ist, nicht so genau eingestellt werden muss, um eine Zerstörung optischer Elemente in der Kavität zu vermeiden.

Wie bei der ersten Laseranordnung, ist aufgrund des Wegverlängerungssystems die resonatorinterne Laserintensität niedrig und die Pulsdauer T₂ des ausgekoppelten Arbeitslaserstrahls erhöht. Der Laserstrahl hinter dem teiltransmittiven, ersten Resonatorspiegel 10 kann für Überwachungszwecke verwendet werden, da er dieselbe Pulsdauer besitzt und einem prozentualen Anteil des Arbeitslaserstrahls entspricht.

Nachfolgend werden Ausführungen von Wegverlängerungssystemen beschrieben.

### Erstes Wegverlängerungssystem

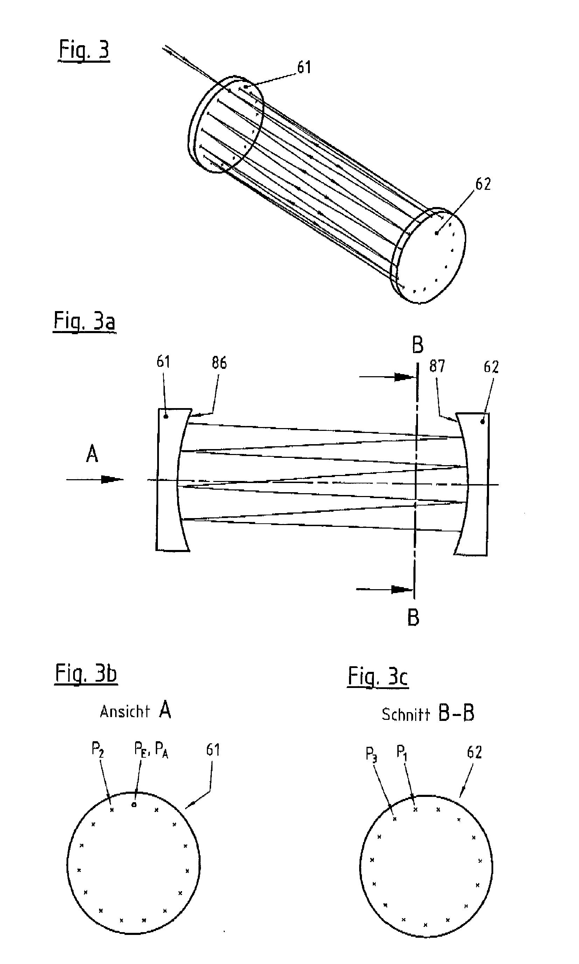

Die Fig. 3 bis 3c zeigen ein Wegverlängerungssystem, bei dem die erste Reflektionsvorrichtung 61 eine rotationssymmetrische, gekrümmte Spiegelfläche 86 (Fig. 3a) aufweist. Ferner weist eine zweite Reflektionsvorrichtung 62 eine rotationssymmetrische, gekrümmte Spiegelfläche 87 (Fig. 3a) auf. Die erste und zweite Reflektionsvorrichtung 61 und 62 sind jeweils ein Hohlspiegel mit einem geringen Krümmungsradius. Der Eingangslaserstrahl wird über eine Bohrung in der ersten Reflektionsvorrichtung 61 eingekoppelt und über die gleiche Bohrung nach mehrmaligem Hin- und Herreflektieren wieder ausgekoppelt. Eingezeichnet (Fig. 3b, Fig. 3c) sind ein Eintrittspunkt P_{E}, ein Reflexionspunkt P₁, weitere Reflektionspunkte P₂ und P₃ und ein mit dem Eintrittspunkt P_{E} übereinstimmender Austrittspunkt P_{A}, um Ort und Reihenfolge des hin- und herreflektierten Laserstrahls zu illustrieren. Vorteil: Die Komponenten sind günstig. Die Montage ist schnell und unkompliziert. Nachteil: Es sind relativ große Spiegelflächen notwendig.

### Zweites Wegverlängerungssystem

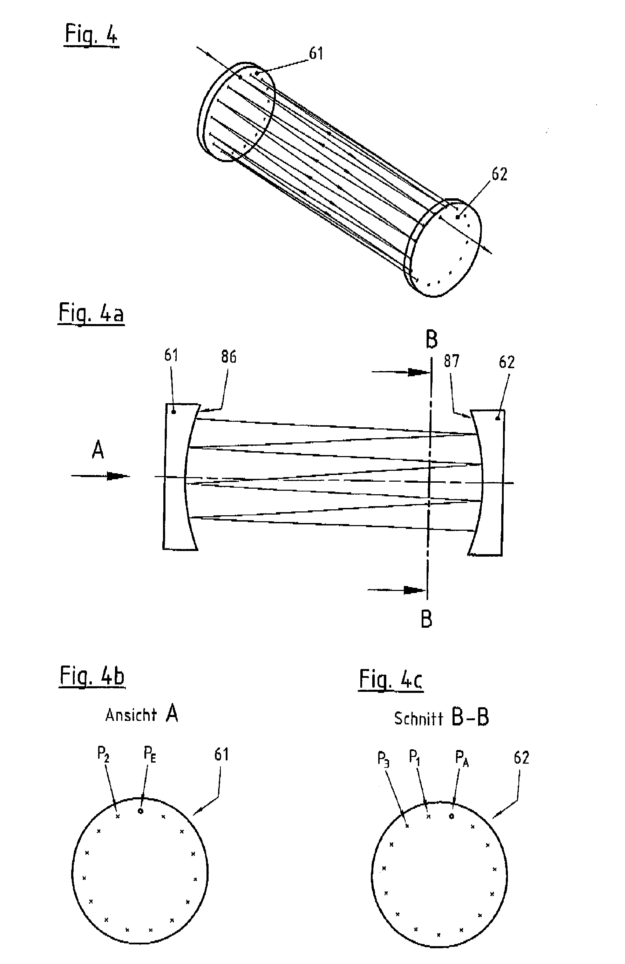

Das Wegverlängerungssystem nach Fig. 4 bis Fig. 4c, das als zweites Wegverlängerungssystem bezeichnet wird, stimmt weitgehend mit dem ersten Wegverlängerungssystem überein. Der Unterschied liegt darin, dass der Ausgangsstrahl das Wegverlängerungssystem über eine Bohrung in der zweiten Reflektionsvorrichtung 62 verlässt.

Die Anzahl der Reflektionen können, wie beim ersten Wegverlängerungssystem, sowohl durch den Abstand zwischen der ersten Reflektionsvorrichtung 61 und zweiten Reflektionsvorrichtung 62 bei gegebenem Krümmungsradius als auch durch eine Rotation der zweiten Reflektionsvorrichtung 62 um die optische Achse verändert werden. Eine Rotation der ersten Reflektionsvorrichtung 61 ist möglich, aber aufgrund des festen Resonatoraufbaus nicht sinnvoll, da der Strahlengang für den einzukoppelnden Laserstrahl in Höhe und Position verändert werden müsste.

### Drittes Wegverlängerungssystem

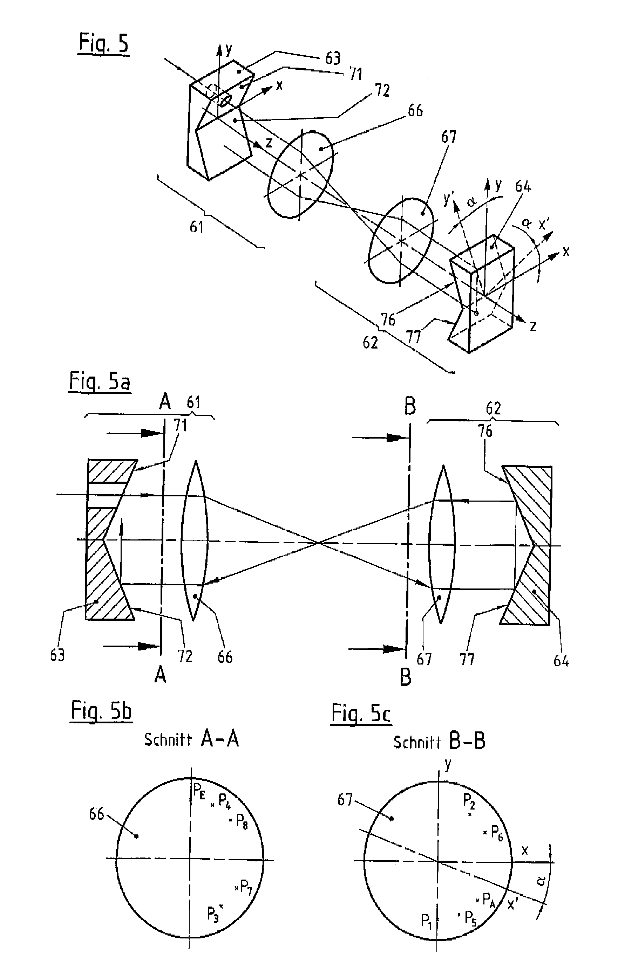

Das Wegverlängerungssystem nach Fig. 5 bis Fig. 5c wird als drittes Wegverlängerungssystem bezeichnet. Eine erste Reflektionsvorrichtung 61 weist Spiegelflächen 71 und 72 eines ersten Prismas 63 auf. Diese Spiegelflächen 71 und 72 korrespondieren mit einem Mittel 66 mit Fokussiereigenschaften. Das Mittel mit Fokussiereigenschaften 66 ist eine Linse. Den gleichen Aufbau weist die zweite Reflexionsvorrichtung 62 auf. Spiegelflächen 76 und 77 eines zweiten Prismas 64 korrespondieren mit einem Mittel 67 mit Fokussiereigenschaften, das eine zweite Linse ist. Der Eingangslaserstrahl wird über eine Bohrung im ersten Prisma 63 eingekoppelt. Dann wird der Laserstrahl von der ersten Linse gebrochen und fokussiert und an der zweiten Linse wieder gebrochen und von dem zweiten Prisma 64 umgelenkt. Eingezeichnet (Fig. 5b, Fig. 5c) sind ein Eintrittspunkt P_{E}, ein Reflexionspunkt P₁, weitere Reflektionspunkte P₂ bis P₈, und ein Austrittspunkt P_{A}, um Ort und Reihenfolge des hin- und herreflektierten Laserstrahls zu illustrieren. Das zweite Prisma 64 ist um einen Winkel α um die z-Achse gedreht. Dabei bildet sich ein neues Koordinatensystems mit x', y', und z. Über den Winkel α lässt sich die Anzahl der Reflektionen steuern. Der Ausgangslaserstrahl wird über die Bohrung des ersten Prismas 63 wieder ausgekoppelt. In Abweichung zum dargestellten Ausführungsbeispiel könnte der Ausgangsstrahl auch über eine Bohrung im zweiten Prisma 64 ausgekoppelt werden.

Vorteil: Es können Standardkomponenten eingesetzt werden. Sind die Komponenten justiert, kann die Reflektionsanzahl einfach und schnell durch ein Drehen des zweiten Prismas 64 eingestellt werden.

Nachteil: Es sind weniger Reflektionen als beim ersten und zweiten Wegverlängerungssystem möglich. Um Aberrationen möglichst gering zu halten, werden spezielle, teure Linsen benötigt.

### Viertes Wegverlängerungssystem

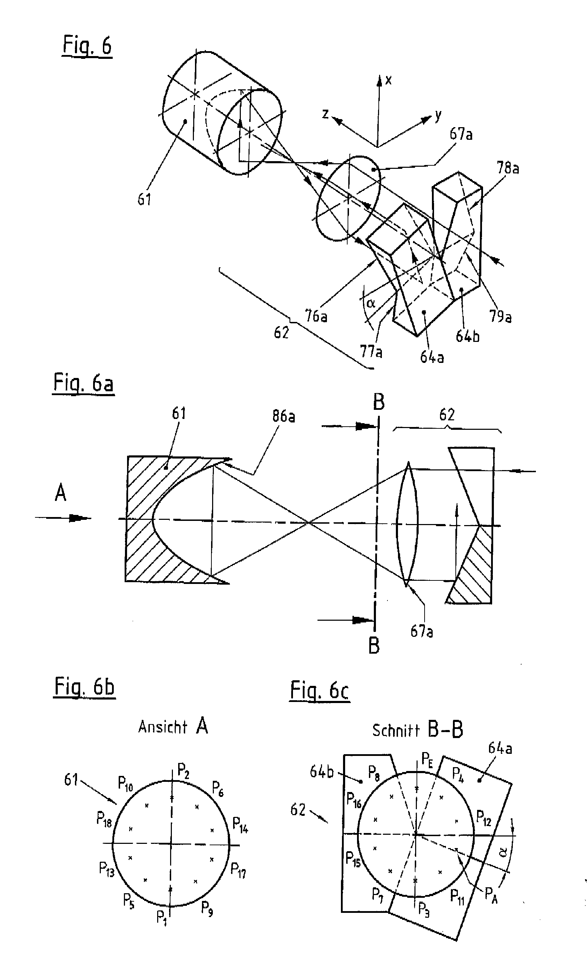

Die Fig. 6 bis 6c illustrieren ein viertes Wegverlängerungssystem. Die erste Reflektionsvorrichtung 61 des Wegverlängerungssystems weist eine rotationssymmetrische, gekrümmte Spiegelfläche 86a aufweist. Diese Spiegelfläche 86a ist die Spiegelfläche eines Rotationsparaboloid-Hohlspiegels mit Umlenkung oder eine asphärische Spiegelfläche. Die zweite Reflektionsvorrichtung 62 des Wegverlängerungssystems weist prismatische Spiegelflächen 76a und 77a eines Prismas 64a und Spiegelflächen 78a und 79a eines Prismas 64b auf. Diese Spiegelflächen 76a, 77a, 78a und 79a korrespondieren mit einem Mittel mit Fokussiereigenschaften 67a. Das Mittel ist eine Linse. Der Eingangstrahl wird zwischen dem Prisma 64a und dem Prisma 64b eingekoppelt. Hierzu dient eine Aussparung. Die Fig. 6c zeigt am besten, dass das Prisma 64a um einen Winkel α gegenüber dem Prisma 64b um die Längsachse oder die optische Achse verdreht ist. Dies ermöglicht ein mehrfaches Umlaufen des Strahls. Eingezeichnet sind ein Eintrittspunkt P_{E}, ein Reflexionspunkt P₁, weitere Reflektionspunkte P₂ bis P₁₈, und ein Austrittspunkt P_{A}, um Ort und Reihenfolge des hin- und herreflektierten Laserstrahls zu illustrieren.
Vorteil: Der Aufbau ist relativ einfach. Eine einfache Verdrehung des Prismas 64a gegenüber dem Prisma 64b erhöht die Anzahl der Reflektionen. Es ist eine hohe Anzahl an Reflektionen möglich.
Nachteil: Ein Paraboloid ist teuer. Das Prisma 64b muss bearbeitet werden.

### Fünftes Wegverlängerungssystem

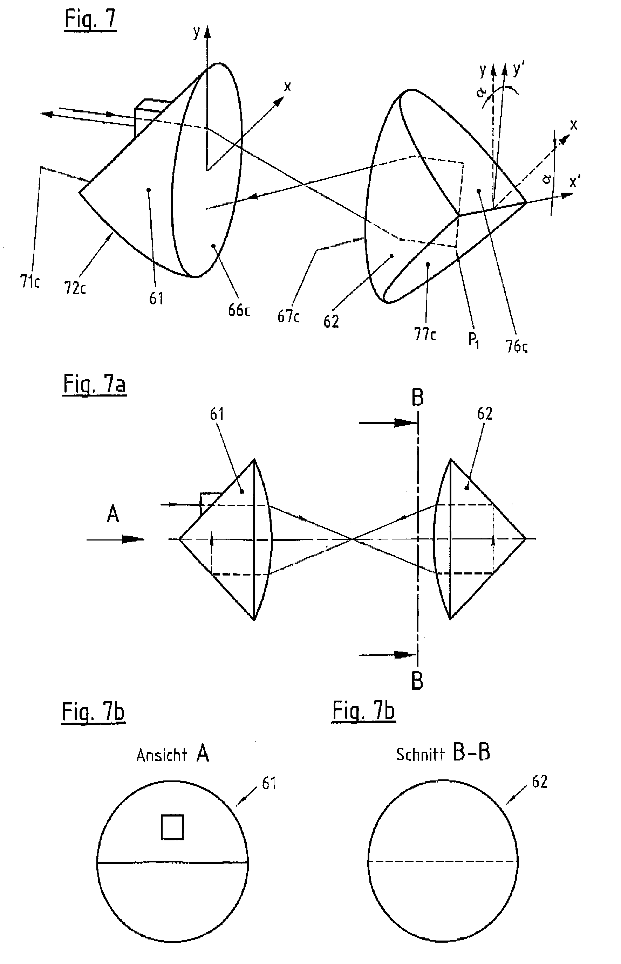

Das fünfte Wegverlängerungssystem geht aus den Fig. 7 bis 7c hervor. Die erste Reflektionsvorrichtung 61 des Wegverlängerungssystems weist prismatische Spiegelflächen 71c und 72c auf. Die Spiegelflächen 71 c und 72c korrespondieren mit einem Mittel 66c mit Fokussiereigenschaften. Das Mittel mit Fokussiereigenschaften ist eine angeformte, gekrümmte Oberfläche. Die erste Reflektionsvorrichtung 61 ist folglich ein monolithischer Prismenblock mit Spiegelflächen 71 c und 72c. Die zweite Reflektionsvorrichtung 62 weist den gleichen Aufbau mit Spiegelflächen 76c und 77c und einem Mittel 67c mit Fokussiereigenschaften auf. Der Eingangslaserstrahl wird über ein Fenster der ersten Reflektionsvorrichtung 61 eingekoppelt, dann an der gekrümmten Vorderseite gebrochen und dann zur zweiten Reflektionsvorrichtung 62 geleitet, welche um einen Winkel α zur ersten Reflektionsvorrichtung 61 verdreht ist. Nach mehrmaligem Hin- und Herreflektieren gelangt der Strahl wieder an das Fenster der ersten Reflektionsvorrichtung 61 und wird hierüber ausgekoppelt. Die Prismenflächen sind unter 90° an den monolithischen Block geschliffen. Der Winkel von α gibt die Anzahl der Reflektionen vor.
Vorteil; Die Justage ist einfach, da nur zwei Bauteile vorliegen, wobei die Anzahl an Reflektionen über den Winkel α starr festgelegt ist.
Nachteil: Die erste und zweite Reflektionsvorrichtung ist aufwändig herzustellen und somit sehr teuer.

### Lasersystem mit einem optisch parametrischen Oszillator

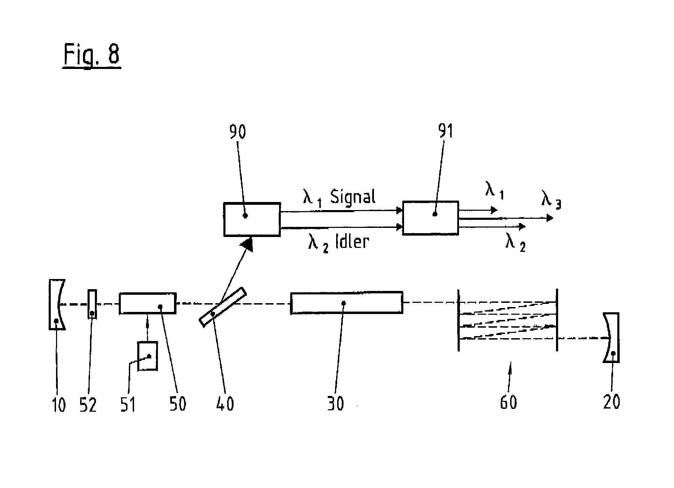

Die Fig. 8 zeigt, dass die in Fig. 1 dargestellte Laseranordnung Teil eines Lasersystems mit einem optisch parametrischen Oszillator (OPO) 90 ist. Das Lasersystem ist derart ausgebildet, dass mit der Laseranordnung der parametrische Oszillator 90 pumpbar ist

Ferner weist das Lasersystem zusätzlich einen optisch parametrischen Verstärker 91 auf, der vom optisch parametrischen Oszillator 90 pumpbar ist. In Abweichung zum dargestellten Ausführungsbeispiel kann der optisch parametrische Verstärker (OPO) 91 auch entfallen, wenn bereits eine ausreichend Pulsenergie für die Signal- oder Idlerwellenlänge erreicht wurde.

Das Lasermedium 30 kann ein Festkörperlasermedium darstellen, mit dem ein Laserstrahl der Wellenlänge von 1 bis 3 µm erzeugbar ist. Je näher sich die Pumpwellenlänge an der Zielwellenlänge befindet, desto effizienter ist der Konversionsprozess ins mittlere Infrarot mit einem OPO. Des weiteren existieren nur wenige nichtlineare Materialien, die direkt mit Wellenlängen kleiner als 1,1 µm gepumpt werden können und dabei Wellenlängen im mittleren Infrarot erzeugen, wie z.B. CSP₂ (Cadmium Silizium Phosphid).

Nach dem gepumpten OPO 90 entstehen zwei neue Wellenlängen λ₁ und λ₂, wobei λ₁ kleiner als λ₂ ist und als Signalwellenlänge bezeichnet wird. λ₁ kann durch einen nachgeschalteten OPA 91 durch Nutzung der transmittierten Pumpenergie des Arbeitslaserstrahls weiter verstärkt werden oder λ₂ kann mit λ₁ weiter verstärkt werden, wobei eine dritte Wellenlänge λ₃ entsteht. Für medizinische Anwendungen können zum Beispiel folgende Wellenlängenkombinationen erzeugt werden:
- Mit einem OPO 2,9 µm und 6,45 µm, fakultativ mit einem nachgeschalteten OPA auch 5,3 µm.
- Mit einem OPO 3 µm und 6,1 µm, fakultativ mit einem nachgeschalteten OPA auch 6 µm.

Für militärische Anwendungen können folgende Wellenlängen erzeugt werden:
- Mit einem OPO 3 - 5 µm, fakultativ ein nachgeschalteter OPA.

Generell werden hohe Pulsenergien mit mindestens einer Verstärkungsstufe nach dem Laserresonator realisiert, wobei die Anzahl der Verstärkungsstufen nur durch die Zerstörschwelle der verwendeten Materialien begrenzt wird. Mit dem Wegverlängerungssystem und dem Cavity-Dumping ist es möglich, eine hohe Pulsenergie mit einstellbarer Pulsbreite aus einem Lasersystem zu extrahieren, so dass das Lasersystem kleiner, einfacher und kostengünstiger ausfällt. Jede nachgeschaltete Verstärkungsstufe benötigt ein zusätzliches Pumplasersystem und wird dadurch aufwändiger und teurer.

### Bezugszeichenliste

1 Laseranordnung
10 erster Resonatorspiegel
20 zweiter Resonatorspiegel
30 Lasermedium
40 Strahlteiler
50 elektrooptischer Modulator (EOM)
51 Steuereinrichtung
52 λ/4-Platte
60 optisches Wegverlängerungssystem
61 erste Reflektionsvorrichtung
62 zweite Reflektionsvorrichtung
63 erstes Prisma (Ausführung zu Fig. 5)
64 zweites Prisma (Ausführung zu Fig. 5)
64a, 64b je ein Prisma (Ausführung zu Fig. 6)
66, 67 Mittel mit Fokussiereigenschaften (Ausführung zu Fig. 5)
67a Mittel mit Fokussiereigenschaften (Ausführung zu Fig. 6)
66c, 67c Mittel mit Fokussiereigenschaften (Ausführung zu Fig. 7)
71, 72, 76, 77 je eine Spiegelfläche eines Prismas (Ausführung zu Fig. 5)
76a, 77a, 78a, 79a je eine Spiegelfläche eines Prismas (Ausführung zu Fig. 6)
71 c, 72c, 76c, 77c je eine Spiegelfläche eines Prismas (Ausführung zu Fig. 7)
86, 87 rotationssymmetrische, gekrümmte Spiegelfläche (Ausführung zu Fig. 3 u. 4)
86a rotationssymmetrische, gekrümmte Spiegelfläche (Ausführung zu Fig. 6)
90 optisch parametrischer Oszillator (OPO)
91 optisch parametrischer Verstärker (OPA)

P_{E} Eintrittspunkt
P₁, P₂, ... jeweils ein Reflektionspunkt
P_{A} Austrittspunkt

T₁ Dauer, in der der Resonator geschlossen ist
T₂ Dauer des Pulses des Arbeitslaserstrahls
T_{b} Kavitätsaufbauzeit

## Patentansprüche

1. Laseranordnung (1), mit
a) einem Resonator mit einem Strahlengang zwischen mindestens einem ersten und zweiten Resonatorspiegel (10, 20), derart, dass im Strahlengang folgende Elemente angeordnet sind:
b) ein Lasermedium (30), das von einer Pumpvorrichtung pumpbar ist,
c) ein polarisationsabhängiger Strahlteiler (40) zum Auskoppeln eines Arbeitslaserstrahls,
d) ein elektrooptischer Modulator (50) zur Änderung der Polarisation,
**dadurch gekennzeichnet,**
e) **dass** im Strahlengang zusätzlich ein optisches Wegverlängerungssystem (60) angeordnet ist,
f) das mindestens eine erste Reflektionsvorrichtung (61) und eine zweite, hierzu beabstandete Reflektionsvorrichtung (62) aufweist, derart ausgebildet,
g) **dass** ein Laserstrahl mehrfach zwischen der ersten Reflektionsvorrichtung (61) und der zweiten Reflektionsvorrichtung (62) unter Erzeugung einer periodischen Mehrfachabbildung hin- und herreflektierbar ist.

2. Laseranordnung (1) nach Anspruch 1, **dadurch gekennzeichnet, dass** das Wegverlängerungssystem (60) so ausgebildet ist, dass sein Ausgangsstrahl eine 1 zu 1-Abbildung seines Eingangsstrahles ist.

3. Laseranordnung (1) nach Anspruch 1 oder 2, **dadurch gekennzeichnet, dass** mindestens eine Reflektionsvorrichtung (61, 62) des Wegverlängerungssystems (60) prismatische Spiegelflächen (71, 72, 76, 77, 76a, 77a, 78a, 79a, 71c, 72c, 76c, 77c) aufweist und diese Spiegelflächen mit einem Mittel (66, 67, 67a, 66c, 67c) mit Fokussiereigenschaften korrespondieren.

4. Laseranordnung (1) nach einem der Ansprüche 1 bis 3, **dadurch gekennzeichnet, dass** mindestens eine Reflektionsvorrichtung (61, 62) des Wegverlängerungssystems (60) eine gekrümmte Spiegelfläche (86, 87, 86a) aufweist.

5. Laseranordnung (1) nach einem der Ansprüche 1 bis 4, **dadurch gekennzeichnet, dass** das Wegverlängerungssystem (60) so ausgebildet ist, dass über ein gemeinsames Fenster sowohl eingekoppelt als auch ausgekoppelt wird.

6. Laseranordnung (1) nach einem der Ansprüche 1 bis 5, **dadurch gekennzeichnet, dass** der elektrooptische Modulator (50) an eine Steuereinrichtung (51) angeschlossen ist.

7. Laseranordnung (1) nach Anspruch 6, **dadurch gekennzeichnet, dass** mit der Steuereinrichtung (51) ein Rechteck-Pulssignal für den elektrooptischen Modulator (50) erzeugbar ist.

8. Laseranordnung (1) nach einem der Ansprüche 1 bis 7, **dadurch gekennzeichnet, dass** mindestens ein Resonatorspiegel (10, 20) eine Reflektivität zwischen 80 und 99 % aufweist.

9. Laseranordnung (1) nach einem der Ansprüche 1 bis 8, **dadurch gekennzeichnet, dass** die Laseranordnung (1) Teil eines Lasersystems mit einem optisch parametrischen Oszillator (90) ist, derart ausgebildet, dass mit der Laseranordnung (1) der parametrische Oszillator (90) pumpbar ist.

10. Laseranordnung (1) nach Anspruch 9, **dadurch gekennzeichnet, dass** das Lasersystem zusätzlich einen optisch parametrischen Verstärker (91) ausweist, der vom optisch parametrischen Oszillator (90) pumpbar ist.
